# EUROPÄISCHE PATENTSCHRIFT

(11) **EP 3 978 884 B1**
(45) Veröffentlichungstag und Bekanntmachung des Hinweises auf die Patenterteilung: **29.05.2024**
(21) Anmeldenummer: 20199749.1
(22) Anmeldetag: 02.10.2020
(51) Int. Cl.: G01K 7/16

(54) **DRAHT MIT PLATIN-ZUSAMMENSETZUNG ZUR KONTAKTIERUNG VON TEMPERATURSENSOREN**
WIRE WITH PLATINUM COMPOSITION FOR CONTACTING TEMPERATURE SENSORS
FIL AYANT UNE COMPOSITION PLATINE PERMETTANT DE METTRE EN CONTACT DES CAPTEURS DE TEMPÉRATURE

(43) Veröffentlichungstag der Anmeldung: 06.04.2022
(73) Patentinhaber: Heraeus Precious Metals GmbH & Co. KG, 63450 Hanau (DE)
(72) Erfinder: WEGNER, Dr. Matthias, 63450 Hanau (DE)
(74) Vertreter: Schultheiss & Sterzel Patentanwälte PartG mbB

(56) Entgegenhaltungen:
- DE-A1- 10 211 029
- DE-A1-102005 038 772
- DE-B4- 10 211 029
- DE-B4-102005 038 772
- US-A- 4 507 156

## Beschreibung

Die Erfindung betrifft einen Draht zur elektrischen Kontaktierung von Temperatursensoren aufweisend eine Platin-Zusammensetzung sowie einen Temperatursensor mit mindestens einem solchen Draht sowie ein Verfahren zur Herstellung eines solchen Drahts und eines solchen Temperatursensors. Die Platin-Zusammensetzung besteht dabei zumindest zu 50 Gew% aus Platin (Pt), zu 2 Gew% bis 3,5 Gew% aus Wolfram (W) und enthält 0,05 Gew% bis 1 Gew% Oxide der Nicht-Edelmetalle Zirkonium (Zr) oder Aluminium (Al). Die Platin-Zusammensetzung kann auch bis zu 47,95 Gew% von zumindest einem der Edelmetalle Rhodium, Gold, Iridium und Palladium enthalten und kann als Teil der Oxide auch Oxide der Nicht-Edelmetalle Yttrium (Y) und Scandium (Sc) und als Rest Platin einschließlich Verunreinigungen enthalten.

Dispersionsgehärteter Platindraht (Pt DPH-A Draht) wird aktuell gerne zur elektrischen Kontaktierung von Thermistoren und anderen Temperatursensoren unter extremen Bedingungen verwendet. Diese Temperatursensoren werden unter anderem in der Automobilindustrie zur Temperaturmessung in Abgassträngen beziehungsweise Abgasströmen von Autos verwendet (zum Beispiel zur Bestimmung von Katalysatortemperaturen und / oder Abgastemperaturen). Unter Einsatzbedingungen herrschen dort Temperaturen von 1000°C und höher, in korrosiver Abgasatmosphäre. Während der elektrischen Kontaktierung der Temperatursensoren und der Herstellung der Drähte können Temperaturen von 1300°C bis 1600°C auftreten. Ein solcher Temperatursensor ist beispielsweise aus der DE 102 11 029 B4 bekannt. Zusätzlich zu der thermischen Belastung des Drahts kommt es zu einer mechanischen Belastung des Bauteils, beispielsweise durch Vibrationen. Während sich dispersionsgehärtetes Platin durch eine exzellente Korrosionsresistenz auszeichnet, besitzt es oft unzureichende mechanische Eigenschaften.

Die Herstellung, Bearbeitung und die physikalischen Eigenschaften derartiger dispersionsgehärteter Platin-Zusammensetzungen sind beispielsweise aus den Druckschriften GB 1 280 815 A, GB 1 340 076 A, GB 2 082 205 A, EP 0 683 240 A2, EP 0 870 844 A1, EP 0 947 595 A2, EP 1 188 844 A1, EP 1 295 953 A1, EP 1 964 938 A1, US 2 636 819 A, US 4 507 156 A, DE 23 55 122 A1, DE10 2005 038 772 A1, WO 81/01013 A1 und WO 2015/082630 A1 bekannt.

Dispersionsverfestigte Platin-Zusammensetzungen werden meistens pulvermetallurgisch oder schmelzmetallurgisch durch Zulegieren von Zirkonium (Zr) und gegebenenfalls weiteren Nicht-Edelmetallen wie Yttrium (Y) oder Scandium (Sc) hergestellt, welche in einem nachgelagerten Oxidationsprozess zu Zirkonoxid (ZrO₂), Yttriumoxid (Y₂O₃) und Scandiumoxid (SC₂O₃) oxidiert werden.

Die Aufgabe der Erfindung besteht also darin, die Nachteile des Stands der Technik zu überwinden. Dabei sollen möglichst die Vorteile, die Draht aus einem dispersionsgehärteten Platin aufweist, soweit wie möglich erhalten bleiben. Insbesondere sollen ein aus einer oder mit einer Platin-Zusammensetzung hergestellter Draht sowie ein damit elektrisch kontaktierter Temperatursensor bereitgestellt werden, wobei die Platin-Zusammensetzung und der Draht möglichst kostengünstig und unaufwendig hergestellt werden können sollen. Zudem soll der Draht eine möglichst hohe Festigkeit und Bruchdehnung aufweisen. Dadurch kann der Draht in einem Temperatursensor verarbeitet und der Sensor unter extremen Bedingungen, wie sie beispielsweise in einem Abgasstrang eines Autos vorherrschen, verwendet werden.

Durch die Erfindung sollen sowohl die mechanischen Eigenschaften verbessert als auch die Kosten abgesenkt werden. Allgemein sind Drähte aus oder mit derartigen Platin-Zusammensetzungen vor allem bei hohen Anwendungstemperaturen unter korrosiven Bedingungen in Kombination mit signifikanter mechanischer Belastung im Einsatz, wie beispielsweise als Kontaktdrähte zur elektrischen Kontaktierung von Temperatursensoren in Abgasströmen oder Motoren.

Die Aufgaben der Erfindung werden gelöst durch einen Draht zur elektrischen Kontaktierung von Temperatursensoren, wobei der Draht zu mindestens 50 Gew% aus einer Platin-Zusammensetzung besteht, die Platin-Zusammensetzung enthaltend
1) 2 Gew% bis 3,5 Gew% Wolfram,
2) bis zu 47,95 Gew% von wenigstens einem Edelmetall, das ausgewählt ist aus der Gruppe, die aus Rhodium, Gold, Iridium und Palladium und Mischungen davon besteht,
3) 0,05 Gew% bis 1 Gew% Oxide von wenigstens einem Nicht-Edelmetall, das ausgewählt ist aus der Gruppe, die aus (i) Zirkonium, (ii) Aluminium und (iii) Zirkonium und wenigstens einem Element ausgewählt aus Aluminium, Yttrium und Scandium besteht, und
4) als Rest wenigstens 50 Gew% Platin einschließlich Verunreinigungen.

Erfindungsgemäß bevorzugt sind die 0,05 Gew% bis 1 Gew% Oxide von dem wenigstens einen Nicht-Edelmetall Oxide von Zirkonium oder Oxide von Zirkonium und Oxide von Yttrium und/oder Oxide von Scandium.

Die Platin-Zusammensetzung ist vorzugsweise eine Platin-Basis-Legierung. Unter einer Platin-Basis-Legierung wird eine Legierung verstanden, die zumindest zu 50 Atom% aus Platin besteht.

Bevorzugt sind 0,1 Gew% bis 0,7 Gew%, besonders bevorzugt 0,2 Gew% bis 0,5 Gew% der Oxide von dem wenigstens einen Nicht-Edelmetall in der Platin-Zusammensetzung enthalten. Hohe Anteile an Oxiden der Nicht-Edelmetalle führen zu höheren Festigkeiten des Drahts bei mechanischer Belastung. Drähte mit Patin-Zusammensetzungen mit geringen Anteilen an Nicht-Edelmetalloxiden zeigen Vorteile hinsichtlich der Verarbeitbarkeit, beispielsweise Schweißbarkeit oder Formbarkeit der Platin-Zusammensetzung zur Herstellung der Drähte.

Gemäß einer Weiterbildung der vorliegenden Erfindung kann vorgesehen sein, dass die Platin-Zusammensetzung bis zu 30 Gew% von wenigstens einem der Edelmetalle enthält, das ausgewählt ist aus der Gruppe, die aus Rhodium, Gold, Iridium und Palladium und Mischungen davon besteht, bevorzugt von 0,5 Gew% bis 30 Gew% von wenigstens einem dieser Edelmetalle enthält, besonders bevorzugt von 1 Gew% bis 20 Gew% von wenigstens einem dieser Edelmetalle enthält, ganz besonders bevorzugt von 1 Gew% bis 10 Gew% von wenigstens einem dieser Edelmetalle enthält.

Ferner kann vorgesehen sein, dass die Platin-Zusammensetzung bis zu 10 Gew% Gold, bis zu 30 Gew% Rhodium, bis zu 30 Gew% Iridium oder bis zu 47,95 Gew% Palladium als das wenigstens eine Edelmetall aufweist.

Es kann sich bei der Platin-Zusammensetzung bis auf übliche beziehungsweise herstellungsbedingte Verunreinigungen um eine reine Platin-Wolfram-Zusammensetzung handeln, in der die Oxide von dem wenigstens einen Nicht-Edelmetall Zirkonium oder Aluminium oder Zirkonium und Aluminium, Yttrium und/oder Scandium verteilt sind. Weiterhin kann die Platin-Zusammensetzung aber auch weitere Edelmetalle, nämlich Rhodium, Gold, Iridium und Palladium, enthalten, wobei die Platin-Zusammensetzung in diesem Fall vorzugsweise eine Platin-Basis-Legierung ist.

Unter den Verunreinigungen der Bestandteile der Platin-Zusammensetzung sind übliche Verunreinigungen zu verstehen, die aufgrund und im Zuge des Darstellungsprozesses in die Ausgangsmaterialien gelangt sind beziehungsweise nicht mit vertretbarem Aufwand (weitergehend oder vollständig) aus den Rohstoffen entfernt werden konnten.

Bevorzugt kann vorgesehen sein, dass die Platin-Zusammensetzung nicht pulvermetallurgisch hergestellt ist.

Bei erfindungsgemäßen Drähten kann vorgesehen sein, dass die Platin-Zusammensetzung dispersionsgehärtet ist.

Eine dispersionsgehärtete Platin-Zusammensetzung der erfindungsgemäßen Zusammensetzung weist Ausscheidungen der Oxide von dem wenigstens einen Nicht-Edelmetall in der Platin-(Platingruppen-Metall-)Wolfram-Matrix auf, die zu einer Härtung der Platin-Zusammensetzung führen.

Durch die Dispersionshärtung werden die mechanischen Eigenschaften des Drahts verbessert.

Es kann auch vorgesehen sein, dass die Verunreinigungen in der Summe einen Anteil von maximal 1 Gew% in der Platin-Zusammensetzung haben, bevorzugt von maximal 0,5 Gew%.

Hierdurch wird sichergestellt, dass die physikalischen Eigenschaften der Platin-Zusammensetzung und damit des Drahts nicht oder möglichst wenig von den Verunreinigungen beeinflusst werden.

Des Weiteren kann vorgesehen sein, dass der Draht zumindest zu 90 Gew% aus der Platin-Zusammensetzung besteht oder der Draht bis auf eine äußere Beschichtung oder Plattierung aus der Platin-Zusammensetzung besteht oder der Draht aus der Platin-Zusammensetzung besteht.

Dadurch wird erreicht, dass die Platin-Zusammensetzung die physikalischen und insbesondere die mechanischen Eigenschaften des Drahts bestimmt. Sofern eine Beschichtung vorhanden ist, kann diese die elektrischen Eigenschaften und insbesondere die elektrische Kontaktierbarkeit des Drahts zielgerichtet verbessern oder als Abschirmung gegen korrosive Medien dienen.

Ferner kann vorgesehen sein, dass die Oxide von dem wenigstens einen Nicht-Edelmetall zu wenigstens 50 mol% als mit Yttriumoxid und/oder Scandiumoxid kubisch stabilisiertes Zirkonoxid vorliegen, bevorzugt die Oxide von dem wenigstens einen Nicht-Edelmetall zu wenigstens 80 mol% als mit Yttriumoxid und/oder Scandiumoxid kubisch stabilisiertes Zirkonoxid vorliegen.

Es wurde gefunden, dass die Sauerstoff-Diffusivität entlang der Oxide durch diese Maßnahmen gesteigert werden kann und damit der Draht durch Oxidation der Nicht-Edelmetalle in relativ kurzer Zeit in oxidierender Atmosphäre zu härten ist. Hierdurch wird eine hohe Sauerstoff-Diffusivität durch die oxidischen Bereiche und damit eine gute Oxidierbarkeit der Nicht-Edelmetalle Zirkonium, Yttrium und Scandium in der Platin-Zusammensetzung erreicht. Dadurch lässt sich die Platin-Zusammensetzung in besonders kurzer Zeit durch oxidische Ausscheidungen härten. Zudem kann hierdurch eine Platin-Zusammensetzung beziehungsweise ein Draht mit besonders hoher Zugfestigkeit und Bruchdehnung erzeugt werden. Außerdem werden durch die Stabilisierung der kubischen Modifikation des Zirkonoxids Temperaturwechselinduzierte Spannungen minimiert.

Bevorzugt kann auch vorgesehen sein, dass die Platin-Zusammensetzung schmelzmetallurgisch hergestellt ist und anschließend durch eine Temperaturbehandlung in einem oxidierenden Medium oxidiert ist, so dass die in der Platin-Zusammensetzung enthaltenen Nicht-Edelmetalle vollständig oxidiert sind, wobei bevorzugt die Platin-Zusammensetzung anschließend zu dem Draht geformt ist und besonders bevorzugt davor und/oder danach geglüht ist.

Hierdurch wird eine besonders gut gehärtete Platin-Zusammensetzung beziehungsweise ein besonders gut gehärteter Draht erzeugt.

Es kann vorgesehen sein, dass die Platin-Zusammensetzung zumindest 80 Gew% Platin einschließlich Verunreinigungen enthält, wobei vorzugsweise die Platin-Zusammensetzung bis zu 17,95 Gew% Rhodium enthält.

Mit dem höheren Platingehalt wird erreicht, dass weniger andere Edelmetalle in der Platin-Zusammensetzung enthalten sind und daher die Platin-Zusammensetzung kostengünstiger ist.

Es kann auch vorgesehen sein, dass die Platin-Zusammensetzung mindestens 1 Gew% von wenigstens einem Edelmetall enthält, das ausgewählt ist aus einer Gruppe, die aus Rhodium, Gold, Palladium und Iridium besteht, wobei vorzugsweise die Platin-Zusammensetzung mindestens 5 Gew% Rhodium als das wenigstens eine Edelmetall enthält.

Durch die Zulegierung der Edelmetalle Rhodium, Gold, Palladium und/oder Iridium können die mechanischen Eigenschaften der Platin-Zusammensetzung verbessert werden. Insbesondere beim Zulegieren von Rhodium können die Hochtemperatureigenschaften des Drahts besonders vorteilhaft verbessert werden.

Bevorzugt kann ferner vorgesehen sein, dass die Platin-Zusammensetzung aus 2 Gew% bis 3,5 Gew% Wolfram, 5 Gew% bis 15 Gew% Rhodium, 0,05 Gew% bis 1 Gew% der Oxide von wenigstens einem Nicht-Edelmetall, das ausgewählt ist aus der Gruppe, die aus (i) Zirkonium, (ii) Aluminium und (iii) Zirkonium und wenigstens einem Element ausgewählt aus Aluminium, Yttrium und Scandium besteht, und als Rest Platin einschließlich Verunreinigungen besteht, oder
die Platin-Zusammensetzung aus 2 Gew% bis 3,5 Gew% Wolfram, 0,05 Gew% bis 1 Gew% der Oxide von wenigstens einem Nicht-Edelmetall, das ausgewählt ist aus der Gruppe, die aus (i) Zirkonium, (ii) Aluminium und (iii) Zirkonium und wenigstens einem Element ausgewählt aus Aluminium, Yttrium und Scandium besteht, und als Rest Platin einschließlich Verunreinigungen besteht.

Hierdurch kann sichergestellt werden, dass die Platin-Zusammensetzung und damit der Draht die gewünschten Eigenschaften aufweisen.

Mit einer erfindungsgemäßen Zusammensetzung werden Zugfestigkeiten von zumindest 300 MPa, bevorzugt zumindest 350 MPa im rekristallisierten Zustand erreicht. Ferner weist die Legierung eine Bruchdehnung von zumindest 12%, bevorzugt von zumindest 15 % auf. Diese Eigenschaftskombination bleibt, durch die Stabilisierung mit Zirkonoxid, im Wesentlichen erhalten, auch wenn das Material Temperaturen von über 1300°C ausgesetzt ist

Die Werkstoffkennwerte wurde in Übereinstimmung mit der Norm DIN EN ISO 6892-1 bestimmt.

Ferner kann vorgesehen sein, dass der Draht eine Bruchdehnung von zumindest 12% aufweist, bevorzugt von zumindest 15%.

Solche Drähte sind ausgezeichnet verarbeitbar und eignen sich daher besonders gut zur Herstellung von z.B. Temperatursensoren. Außerdem sind die Drähte in der Lage den mechanischen, thermischen und chemischen Belastungen, wie sie z.B. beim Einsatz eines Temperatursensors zur Messung von Autoabgastemperaturen auftreten, standzuhalten.

Auch kann vorgesehen sein, dass die Platin-Zusammensetzung zwischen 2,0 Gew% und 3,0 Gew% Wolfram enthält, bevorzugt zwischen 2,3 Gew% und 2,8 Gew% Wolfram enthält.

Bei diesen Wolfram-Gehalten wird eine besonders gute Kombination aus Zugfestigkeit und Bruchdehnung erreicht, ohne an Korrosionsbeständigkeit einzubüßen.

Die der vorliegenden Erfindung zugrundeliegenden Aufgaben werden auch gelöst durch einen Temperatursensor, insbesondere Hochtemperatursensor, zur Bestimmung der Temperatur, der Temperatursensor aufweisend zumindest einen solchen Draht, bevorzugt aufweisend zwei solche Drähte.

Derartige Temperatursensoren, insbesondere Hochtemperatursensoren, weisen die zu dem Draht genannten Vorteile auf und sind besonders gut für den Einsatz in Bereichen mit schnell wechselnder Temperatur und auch in vibrierenden Umgebungen geeignet, das heißt, zum Einsatz im Abgasstrom von KFZ geeignet.

Dabei kann vorgesehen sein, dass ein Thermokontakt oder eine Widerstandsstruktur, insbesondere eine Widerstandsschicht, des Temperatursensors zur elektrischen Kontaktierung elektrisch leitend mit dem zumindest einen Draht verbunden ist, wobei bevorzugt der Temperatursensor zwei solche Drähte aufweist und ein Ende eines ersten der zwei Drähte mit einer Seite des Thermokontakts oder der Widerstandsstruktur oder der Widerstandsschicht elektrisch leitend verbunden ist und ein Ende eines zweiten der zwei Drähte mit einer anderen Seite des Thermokontakts oder der Widerstandsstruktur oder der Widerstandsschicht elektrisch leitend verbunden ist.

Ein solcher Temperatursensor ist besonders gut in thermisch und mechanisch sowie chemisch anspruchsvollen Umgebungen einsetzbar.

Die der vorliegenden Erfindung zugrundeliegenden Aufgaben werden auch gelöst durch ein Verfahren zur Herstellung einer Platin-Zusammensetzung mit den folgenden chronologischen Schritten:
A) Herstellen einer Schmelze aufweisend zwischen 2 Gew% und 3,5 Gew% Wolfram, bis zu 47,95 Gew% von wenigstens einem Edelmetall, das ausgewählt ist aus der Gruppe, die aus Rhodium, Gold, Iridium und Palladium und Mischungen davon besteht, 0,05 Gew% bis 1 Gew% von wenigstens einem oxidierbaren Nicht-Edelmetall, das ausgewählt ist aus der Gruppe, die aus (i) Zirkonium, (ii) Aluminium und (iii) Zirkonium und wenigstens einem Element ausgewählt aus Aluminium, Yttrium und Scandium besteht, und aufweisend als Rest wenigstens 50 Gew% Platin einschließlich Verunreinigungen,
B) Erstarren der Schmelze zu einem Festkörper,
C) Verarbeiten des Festkörpers zu einem Volumenkörper,
D) Oxidation der in dem Volumenkörper enthaltenen Nicht-Edelmetalle durch eine Wärmebehandlung in oxidierendem Medium über einen Zeitraum von wenigstens 24 Stunden bei einer Temperatur von zumindest 750°C, und
E) Verarbeiten des Volumenkörpers zu einem Draht.

Dabei kann vorgesehen sein, dass mit dem Verfahren ein erfindungsgemäßer Draht hergestellt wird, insbesondere gezogen oder gepresst wird.

Es kann auch vorgesehen sein, dass in Schritt E) der Festkörper zunächst bei zumindest 1300 °C für wenigstens 1 h duktilitätsgeglüht wird und anschließend zu einem Draht gezogen oder gepresst wird, wobei vorzugsweise vor, zwischen und/oder nach dem Ziehen oder Pressen eine Glühung bei einer Temperatur zwischen 1000 °C und 1200 °C erfolgt.

Hierdurch wird die Verarbeitung des Festkörpers zu einem Draht vereinfacht und der resultierende Draht weist eine hohe Festigkeit und eine hohe Bruchdehnung auf.

Die der vorliegenden Erfindung zugrundeliegenden Aufgaben werden schließlich auch gelöst durch ein Verfahren zur Herstellung eines Temperatursensors, gekennzeichnet durch Herstellen eines Drahts mit einem solchen Verfahren und elektrisches Kontaktieren eines Thermokontakts oder einer Widerstandsstruktur oder eines Widerstandsschicht mit zumindest einem Stück des Drahts, bevorzugt mit zumindest zwei Stücken des Drahts.

Der Draht kann vor dem elektrischen Kontaktieren beschichtet werden.

Der Erfindung liegt die überraschende Erkenntnis zugrunde, dass es durch das Zulegieren von Wolfram in einen Draht aus oder mit einer dispersionsgehärteten Platin-Zusammensetzung gelingt, die Zugfestigkeit des Drahts deutlich zu erhöhen, während die Bruchdehnung des Drahts sich nicht oder kaum verschlechtern. Der erfindungsgemäße Draht ist somit für die Anwendung als elektrischer Kontaktierungsdraht für Hochtemperatursensoren in Autos, in Motoren und anderen Maschinen einsetzbar, bei denen Temperaturwechsel, hohe Temperaturen und gleichzeitige Vibrationen und mechanische Belastungen sowie eine chemisch korrosive Umgebung zusammenkommen.

Des Weiteren wird bei erfindungsgemäßen Drähten, aufgrund der Verwendung von Wolfram statt Platin (wenn auch nur im geringen Umfang), weniger Edelmetall verwendet, so dass sich zusätzlich ein finanzieller Vorteil ergibt.

Im Folgenden werden Ausführungsbeispiele der Erfindung erläutert, ohne jedoch dabei die Erfindung zu beschränken.

Hergestellt wurden dispersionsverfestigte beziehungsweise dispersionsgehärtete Platin-Wolfram-Legierungen, das heißt eine Platin-Legierung mit 2,1 Gew% Wolfram (PtW2,1 DPH-A) beziehungsweise 2,4 Gew% Wolfram (PtW2,4 DPH-A), sowie zum Vergleich aus dem Stand der Technik bekannte dispersionsgehärtetes Platin (Pt DPH-A). Durch das Hinzulegieren von 2,1 Gew% oder 2,4 Gew% Wolfram zu einer dispersionsgehärteten Platin-Legierung gelang es, die sehr gute Bruchdehnung von circa 15% beizubehalten, gleichzeitig die Streckgrenze zu verdreifachen und die Zugfestigkeit zu verdoppeln.

Hergestellt wurde das Material wie folgt:
Die nachfolgend beschriebenen Platin-Zusammensetzungen wurden hergestellt, indem Barren mit einem Gewicht von 2,5 kg mit Vakuum-Induktionsschmelzen aus der Schmelze abgegossen wurde. Auf diese Weise wurden zwei unterschiedliche Platin-Zusammensetzungen hergestellt, nämlich 2,1 Gew% Wolfram, 1800 ppm Zirkonium, 300 ppm Yttrium, 50 ppm Scandium und als Rest Platin einschließlich Verunreinigungen (PtW2,1 DPH-A) und 2,4 Gew% Wolfram, 1800 ppm Zirkonium, 300 ppm Yttrium, 50 ppm Scandium und als Rest Platin einschließlich Verunreinigungen (PtW2,4 DPH-A). Die Nicht-Edelmetalle Zirkonium, Yttrium und Scandium wurden beim Vakuum-Induktionsschmelzen hinzugefügt.

Der Barren wurde in einer Vakuum-Induktionsschmelze abgegossen, dann an 2,5 mm gewalzt und oxidiert (900 °C für 24 Tage) bis zur vollständigen Umwandlung der Nicht-Edelmetalle Zr, Y und Sc zu deren Oxiden. Im Anschluss wurde eine Duktilitätsglühung (1400 °C für 6 h) durchgeführt und das Material mit einer Zwischenglühung im Durchlaufofen bei 1100 °C bei 1 mm und 1 m/min an Endmaß (Drahtdurchmesser 0,25 mm) gezogen und eine Schlussglühung im Durchlaufofen bei 1100 °C bei einer Ziehgeschwindigkeit von 1 m/min durchgeführt. Die Temperatur von 1100 °C wurde gewählt, da das Material bei dieser Temperatur innerhalb kurzer Zeit vollständig rekristallisiert.

Das Vergleichsmaterial Pt DPH-A wurde analog hergestellt, lediglich auf die Zugabe von Wolfram wurde verzichtet.

Die mechanischen Eigenschaften wurden anschließend experimentell im Zugversuch bestimmt.

Aus der Platin-Zusammensetzung PtW2,1 DPH-A wurden Drähte mit einem Durchmesser von 0,252 mm gefertigt und aus der Platin-Zusammensetzung PtW2,4 DPH-A wurden Drähte mit dem gleichen Durchmesser von 0,252 mm gefertigt.

Zudem wurden zum Vergleich aus der Platin-Zusammensetzung Pt DPH-A Drähte mit einem Durchmesser von 0,246 mm gefertigt.

Für die Drähte der Platin-Zusammensetzungen PtW2,1 DPH-A und PtW2,4 DPH-A wurden die folgenden Parameter beim Versuchsaufbau zur Bestimmung der unten aufgeführten mechanischen Eigenschaften verwendet: Vorkraft 10 N/mm², Geschwindigkeit Streckgrenze 1 mm/min, Geschwindigkeit E-Modul 1 mm/min, und Prüfgeschwindigkeit 10 mm/min. Für die Drähte der Platin-Zusammensetzungen Pt DPH-A mit 0,246 mm wurden die folgenden Parameter verwendet: Vorkraft 5 N/mm², Geschwindigkeit Streckgrenze 1 mm/min, Geschwindigkeit E-Modul 1 mm/min, und Prüfgeschwindigkeit 10 mm/min. Die geringen Vorkräfte beim Einspannen der Proben in die Messapparatur verändern nicht die Struktur der Drähte und haben auf die Messergebnisse daher keinen Einfluss.

Für die Drähte der Platin-Zusammensetzungen PtW2,1 DPH-A, PtW2,4 DPH-A und Pt DPH-A mit 0,25 mm Durchmesser wurden jeweils fünf Drähte gemessen und für die folgenden Werte durch Mittelwertbildung und zur Berechnung der Standardabweichungen (s) verwendet. Außerdem wurden die mechanischen Eigenschaften der Drähte nach einer zusätzlichen weiteren Glühung über einen Zeitraum von 1h bei 1400°C ermittelt, um die Temperaturstabilität gegenüber extrem hohen Temperaturen zu testen.

**Tabelle 1: Messwerte der mechanischen Eigenschaften der gemessenen Drähte Pt DPH-A 0,246 mm:**

| | | |
|---|---|---|
| R_{p0,2} | 64,5 N/mm² | (s = 1,2 N/mm²) |
| Rₘ | 174,7 N/mm² | (s = 3,1 N/mm²) |
| Fₘ | 8,3 N | (s = 0,1 N) |
| A 100mm | 13,18 % | (s = 1,92 %) |

### PtW2,1 0,252 mm:

| | | |
|---|---|---|
| R_{p0,2} | 192,7 N/mm² | (s = 0,8 N/mm²) |
| Rₘ | 353,6 N/mm² | (s = 0,7 N/mm²) |
| Fₘ | 17,64 N | (s = 0,03 N) |
| A 100mm | 16,51 % | (s = 0,75 %) |

### PtW2,4 0,252 mm:

| | | |
|---|---|---|
| R_{p0,2} | 209,1 N/mm² | (s = 3,2 N/mm²) |
| Rₘ | 373,1 N/mm² | (s = 2,3 N/mm²) |
| Fₘ | 18,61 N | (s = 0,11 N) |
| A 100mm | 16,82 % | (s = 0,32 %) |

### PtW2,1 0,252 mm, zusätzliche Glühung 1400°C 1h:

| | | |
|---|---|---|
| R_{p0,2} | 182,6 N/mm² | (s = 0,3 N/mm²) |
| Rₘ | 344,9 N/mm² | (s = 0,4 N/mm²) |
| Fₘ | 17,20 N | (s = 0,02 N) |
| A 100mm | 17,27 % | (s = 0,82 %) |

### PtW2,4 0,252 mm, zusätzliche Glühung 1400°C 1h:

| | | |
|---|---|---|
| R_{p0,2} | 195,0 N/mm² | (s = 3,2 N/mm²) |
| Rₘ | 359,7 N/mm² | (s = 0,1 N/mm²) |
| Fₘ | 17,94 N | (s = 0,01 N) |
| A 100mm | 16,44 % | (s = 0,23 %) |

Dabei ist R_{p0,2} die Streckgrenze bzw. 0,2%-Dehngrenze, Rₘ die Zugfestigkeit, Fₘ die Maximalkraft und A 100mm die Bruchdehnung sowie s die Standardabweichung vom Mittelwert. Die Zugversuche wurden mit einer Stand-Prüfmaschine Z250 von Zwick Roell durchgeführt.

Die vorteilhafte technische Wirkung der erfindungsgemäßen Drähte mit oder aus der Platin-Zusammensetzung, die sich an der hohen Zugfestigkeit bei gleichzeitig hoher Bruchdehnung erkennen lässt, wurde erzielt durch eine geeignete Kombination von Platin und Wolfram und einer Oxiddispersionshärtung (basierend auf Zirkonoxid, die allerdings auch für Aluminiumoxid zu erwarten und daher auch auf Aluminiumoxid übertragbar ist). Die Menge an Wolfram und Oxidbildnern wurde dabei so gewählt, dass die mechanischen Eigenschaften signifikant verbessert werden (insbesondere im direkten Vergleich mit einer Pt DPH-A Legierung ohne Zusatz von Wolfram), ohne dabei die Oxidations- beziehungsweise Korrosionsresistenz unterhalb eines kritischen Niveaus zu verringern, damit das Material des Drahts unter Einsatzbedingungen (beispielsweise in heißen Abgasen eines Verbrennungsmotors) nicht degradiert und schlimmstenfalls ausfällt.

Die hohe Bruchdehnung ist sehr ungewöhnlich für dispersionsgehärtetes Platin und dispersionsgehärtete Platin-Legierungen. Diese verhalten sich normalerweise wesentlich spröder. Begünstigt wird die hohe Bruchdehnung mutmaßlich durch die Herstellung aus der Schmelze und durch die innere Oxidation der Nicht-Edelmetalle Zirkonium, Aluminium, Yttrium und/oder Scandium für dispersionsgehärtete Platin-Legierungen. Insbesondere bei der Ausführung mit durch Yttrium und/oder Scandium stabilisiertes Zirkonoxid geht mit diesem Prozess eine Stabilisierung der kubischen Hochtemperaturphase des Zirkonoxids durch Yttriumoxid und/oder Scandiumoxid einher, so dass diese über den gesamten Temperaturbereich stabil ist. Nicht stabilisiertes Zirkonoxid existiert in 3 kristallinen Modifikation mit Übergängen von Monoklin zu Tetragonal bei ca. 1170°C und bei ca. 2370°C schließlich in die kubische Kristallstruktur.

## Patentansprüche

1. Draht zur elektrischen Kontaktierung von Temperatursensoren, wobei der Draht zu mindestens 50 Gew% aus einer Platin-Zusammensetzung besteht, die Platin-Zusammensetzung enthaltend
1) 2 Gew% bis 3,5 Gew% Wolfram,
2) bis zu 47,95 Gew% von wenigstens einem Edelmetall, das ausgewählt ist aus der Gruppe, die aus Rhodium, Gold, Iridium und Palladium und Mischungen davon besteht,
3) 0,05 Gew% bis 1 Gew% Oxide von wenigstens einem Nicht-Edelmetall, das ausgewählt ist aus der Gruppe, die aus (i) Zirkonium, (ii) Aluminium und (iii) Zirkonium und wenigstens einem Element ausgewählt aus Aluminium, Yttrium und Scandium besteht, und
4) als Rest wenigstens 50 Gew% Platin einschließlich Verunreinigungen.

2. Draht nach Anspruch 1, **dadurch gekennzeichnet, dass**
die Platin-Zusammensetzung dispersionsgehärtet ist, und/oder
der Draht eine Bruchdehnung von zumindest 12% aufweist, bevorzugt von zumindest 15%.

3. Draht nach Anspruch 1 oder 2, **dadurch gekennzeichnet, dass**
die Verunreinigungen in der Summe einen Anteil von maximal 1 Gew% in der Platin-Zusammensetzung haben, bevorzugt von maximal 0,5 Gew%.

4. Draht nach einem der vorangehenden Ansprüche, **dadurch gekennzeichnet, dass**
der Draht zumindest zu 90 Gew% aus der Platin-Zusammensetzung besteht oder der Draht bis auf eine äußere Beschichtung oder Plattierung aus der Platin-Zusammensetzung besteht oder der Draht aus der Platin-Zusammensetzung besteht.

5. Draht nach einem der vorangehenden Ansprüche, **dadurch gekennzeichnet, dass**
die Oxide von dem wenigstens einen Nicht-Edelmetall zu wenigstens 50 mol% als mit Yttriumoxid und/oder Scandiumoxid kubisch stabilisiertes Zirkonoxid vorliegen, bevorzugt die Oxide von dem wenigstens einen Nicht-Edelmetall zu wenigstens 80 mol% als mit Yttriumoxid und/oder Scandiumoxid kubisch stabilisiertes Zirkonoxid vorliegen.

6. Draht nach einem der vorangehenden Ansprüche, **dadurch gekennzeichnet, dass**
die Platin-Zusammensetzung schmelzmetallurgisch hergestellt ist und anschließend durch eine Temperaturbehandlung in einem oxidierenden Medium oxidiert ist, so dass die in der Platin-Zusammensetzung enthaltenen Nicht-Edelmetalle zu mindestens 90% oxidiert oder vollständig oxidiert sind, wobei bevorzugt die Platin-Zusammensetzung anschließend zu dem Draht geformt ist und besonders bevorzugt davor und/oder danach geglüht ist.

7. Draht nach einem der vorangehenden Ansprüche, **dadurch gekennzeichnet, dass**
die Platin-Zusammensetzung wenigstens 80 Gew% Platin einschließlich Verunreinigungen enthält, wobei vorzugsweise die Platin-Zusammensetzung bis zu 17,95 Gew% Rhodium enthält, und/oder
die Platin-Zusammensetzung mindestens 1 Gew% von dem wenigstens einem Edelmetall enthält, das ausgewählt ist aus einer Gruppe, die aus Rhodium, Gold, Palladium und Iridium besteht, wobei vorzugsweise die Platin-Zusammensetzung mindestens 5 Gew% Rhodium als das wenigstens eine Edelmetall enthält.

8. Draht nach einem der vorangehenden Ansprüche, **dadurch gekennzeichnet, dass**
die Platin-Zusammensetzung aus 2 Gew% bis 3,5 Gew% Wolfram, 5 Gew% bis 15 Gew% Rhodium, 0,05 Gew% bis 1 Gew% der Oxide von wenigstens einem Nicht-Edelmetall, das ausgewählt ist aus der Gruppe, die aus (i) Zirkonium, (ii) Aluminium und (iii) Zirkonium und wenigstens einem Element ausgewählt aus Aluminium, Yttrium und Scandium besteht, und als Rest Platin einschließlich Verunreinigungen besteht, oder
die Platin-Zusammensetzung aus 2 Gew% bis 3 Gew% Wolfram, 0,05 Gew% bis 1 Gew% der Oxide von wenigstens einem Nicht-Edelmetall, das ausgewählt ist aus der Gruppe, die aus (i) Zirkonium, (ii) Aluminium und (iii) Zirkonium und wenigstens einem Element ausgewählt aus Aluminium, Yttrium und Scandium besteht, und als Rest Platin einschließlich Verunreinigungen besteht.

9. Draht nach einem der vorangehenden Ansprüche, **dadurch gekennzeichnet, dass**
die Platin-Zusammensetzung zwischen 2,0 Gew% und 3,0 Gew% Wolfram, bevorzugt zwischen 2,4 Gew% und 2,8 Gew% Wolfram enthält.

10. Temperatursensor, insbesondere Hochtemperatursensor, zur Bestimmung der Temperatur, der Temperatursensor aufweisend zumindest einen Draht nach einem der vorangehenden Ansprüche, bevorzugt aufweisend zwei Drähte nach einem der vorangehenden Ansprüche.

11. Temperatursensor nach Anspruch 10, **dadurch gekennzeichnet, dass**
ein Thermokontakt oder eine Widerstandsstruktur, insbesondere eine Widerstandsschicht, des Temperatursensors zur elektrischen Kontaktierung elektrisch leitend mit dem zumindest einen Draht verbunden ist, wobei bevorzugt der Temperatursensor zwei Drähte nach einem der Ansprüche 1 bis 9 aufweist und ein Ende eines ersten der zwei Drähte mit einer Seite des Thermokontakts oder der Widerstandsstruktur oder der Widerstandsschicht elektrisch leitend verbunden ist und ein Ende eines zweiten der zwei Drähte mit einer anderen Seite des Thermokontakts oder der Widerstandsstruktur oder der Widerstandsschicht elektrisch leitend verbunden ist.

12. Verfahren zur Herstellung einer Platin-Zusammensetzung mit den folgenden chronologischen Schritten:
A) Herstellen einer Schmelze aufweisend zwischen 2 Gew% und 3,5 Gew% Wolfram, bis zu 47,95 Gew% von wenigstens einem Edelmetall, das ausgewählt ist aus der Gruppe, die aus Rhodium, Gold, Iridium und Palladium und Mischungen davon besteht, 0,05 Gew% bis 1 Gew% von wenigstens einem oxidierbaren Nicht-Edelmetall, das ausgewählt ist aus der Gruppe, die aus (i) Zirkonium, (ii) Aluminium und (iii) Zirkonium und wenigstens einem Element ausgewählt aus Aluminium, Yttrium und Scandium besteht, und aufweisend als Rest wenigstens 50 Gew% Platin einschließlich Verunreinigungen,
B) Erstarren der Schmelze zu einem Festkörper,
C) Verarbeiten des Festkörpers zu einem Volumenkörper,
D) Oxidation der in dem Volumenkörper enthaltenen Nicht-Edelmetalle durch eine Wärmebehandlung in oxidierendem Medium über einen Zeitraum von wenigstens 24 Stunden bei einer Temperatur von zumindest 750°C, und
E) Verarbeiten des Volumenkörpers zu einem Draht.

13. Verfahren nach Anspruch 12, **dadurch gekennzeichnet, dass**
mit dem Verfahren ein Draht nach einem der Ansprüche 1 bis 11 hergestellt wird, insbesondere gezogen oder gepresst wird.

14. Verfahren nach Anspruch 12 oder 13, **dadurch gekennzeichnet, dass**
in Schritt E) der Festkörper zunächst bei zumindest 1300 °C für wenigstens 1 h duktilitätsgeglüht wird und anschließend zu einem Draht gezogen oder gepresst wird, wobei vorzugsweise vor und/oder nach dem Ziehen oder Pressen eine Glühung bei einer Temperatur zwischen 1000 °C und 1200 °C erfolgt.

15. Verfahren zur Herstellung eines Temperatursensors, **gekennzeichnet durch** Herstellen eines Drahts mit einem Verfahren nach einem der Ansprüche 12 bis 14 und
elektrisches Kontaktieren eines Thermokontakts oder einer Widerstandsstruktur oder eines Widerstandsschicht mit zumindest einem Stück des Drahts, bevorzugt mit zumindest zwei Stücken des Drahts.

## Claims

1. A wire for electrically contacting temperature sensors, the wire consisting of at least 50 wt% of a platinum composition, the platinum composition containing
1) 2 wt% to 3.5 wt% tungsten,
2) up to 47.95 wt% of at least one precious metal selected from the group consisting of rhodium, gold, iridium and palladium and mixtures thereof,
3) 0.05% to 1 wt% of oxides of at least one non-precious metal selected from the group consisting of (i) zirconium, (ii) aluminum and (iii) zirconium and at least one element selected from aluminum, yttrium and scandium, and,
4) as the remainder, at least 50 wt% platinum including impurities.

2. The wire according to Claim 1, **characterized in that**
the platinum composition is dispersion-hardened, and/or
the wire has an elongation at break of at least 12%, preferably at least 15%.

3. The wire according to Claim 1 or 2, **characterized in that**
the total proportion of the impurities in the platinum composition is at most 1 wt%, preferably at most 0.5 wt%.

4. The wire according to any of the preceding Claims, **characterized in that**
the wire consists of at least 90 wt% of the platinum composition, or the wire consists of the platinum composition, except for an outer coating or plating, or the wire consists of the platinum composition.

5. The wire according to any of the preceding Claims, **characterized in that**
at least 50 mol.% of the oxides of the at least one non-precious metal is cubic zirconia stabilized with yttria or scandia or yttria and scandia, and preferably at least 80 mol.% of the oxides of the at least one non-precious metal is cubic zirconia stabilized with yttria or scandia or yttria and scandia.

6. The wire according to any of the preceding Claims, **characterized in that**
the platinum composition is produced by melting metallurgy and is subsequently oxidized by a temperature treatment in an oxidizing medium such that the non-precious metals contained in the platinum composition are at least 90% oxidized or completely oxidized, the platinum composition preferably being subsequently formed into the wire and particularly preferably annealed before and/or after this.

7. The wire according to any of the preceding Claims, **characterized in that**
the platinum composition contains at least 80 wt% platinum including impurities, the platinum composition preferably containing up to 17.95 wt% rhodium, and/or the platinum composition contains at least 1 wt% of the at least one precious metal selected from a group consisting of rhodium, gold, palladium and iridium, the platinum composition preferably containing at least 5 wt% rhodium as the at least one precious metal.

8. The wire according to any of the preceding Claims, **characterized in that**
the platinum composition consists of 2 wt% to 3.5 wt% tungsten, 5 wt% to 15 wt% rhodium, 0.05 wt% to 1 wt% of the oxides of at least one non-precious metal selected from the group consisting of (i) zirconium, (ii) aluminum and (iii) zirconium and at least one element selected from aluminum, yttrium and scandium, and, as the remainder, platinum including impurities, or
the platinum composition consists of 2 wt% to 3 wt% tungsten, 0.05 wt% to 1 wt% of the oxides of at least one non-precious metal selected from the group consisting of (i) zirconium, (ii) aluminum and (iii) zirconium and at least one element selected from aluminum, yttrium and scandium, and, as the remainder, platinum including impurities.

9. The wire according to any of the preceding Claims, **characterized in that**
the platinum composition contains between 2.0 wt% and 3.0 wt% tungsten, preferably between 2.4 wt% and 2.8 wt% tungsten.

10. A temperature sensor, in particular a high-temperature sensor, for determining of temperature, the temperature sensor comprising at least one wire according to any of the preceding Claims, preferably comprising two wires according to any of the preceding Claims.

11. The temperature sensor according to Claim 10, **characterized in that** a thermal contact or a resistive structure, in particular a resistive layer, of the temperature sensor is electrically conductively connected to the at least one wire for electrical contacting, the temperature sensor preferably comprising two wires according to any of Claims 1 to 9, and one end of a first of the two wires being electrically conductively connected to one side of the thermal contact or the resistive structure or the resistive layer, and one end of a second of the two wires being electrically conductively connected to another side of the thermal contact or the resistive structure or the resistive layer.

12. A method for producing a platinum composition comprising the following chronological steps:
A) preparing a melt comprising between 2 wt% and 3.5 wt% tungsten, up to 47.95 wt% of at least one precious metal selected from the group consisting of rhodium, gold, iridium and palladium and mixtures thereof, 0.05 wt% to 1 wt% of at least one oxidizable non-precious metal selected from the group consisting of (i) zirconium, (ii) aluminum and (iii) zirconium and at least one element selected from aluminum, yttrium and scandium, and, as the remainder, at least 50 wt% platinum including impurities,
B) solidifying the melt to form a solid body,
C) processing the solid body to form a volume body, and
D) oxidizing the non-precious metals contained in the volume body by a heat treatment in an oxidizing medium over a time period of at least 24 hours at a temperature of at least 750°C, and
E) processing the volume body to form a wire.

13. The method according to Claim 12, **characterized in that**
a wire according to any of Claims 1 to 11 is produced by the method, in particular drawn or pressed by the method.

14. The method according to Claim 12 or 13, **characterized in that**
in step E), the solid body is first ductility-annealed at at least 1,300°C for at least 1 hour and then drawn or pressed to form a wire, wherein preferably annealing at a temperature between 1,000°C and 1,200°C is carried out before and/or after drawing or pressing.

15. A method for producing a temperature sensor, **characterized by**
producing a wire by a method according to any of claims 12 to 14, and electrically contacting a thermal contact or a resistive structure or a resistive layer with at least one piece of the wire, preferably with at least two pieces of the wire.

## Revendications

1. Fil permettant la mise en contact électrique de capteurs de température, le fil étant constitué d'au moins 50 % en poids d'une composition de platine, la composition de platine contenant
1) 2 % en poids à 3,5 % en poids de tungstène,
2) jusqu'à 47,95 % en poids d'au moins un métal précieux qui est sélectionné dans le groupe qui est constitué de rhodium, or, iridium et palladium et de mélanges de ceux-ci,
3) 0,05 % en poids à 1 % en poids d'oxydes d'au moins un métal non précieux qui est sélectionné dans le groupe qui est constitué de (i) zirconium, (ii) aluminium et (iii) zirconium et d'au moins un élément sélectionné parmi aluminium, yttrium et scandium, et
4) comme reste, au moins 50 % en poids de platine, y compris des impuretés.

2. Fil selon la revendication 1, **caractérisé en ce que**
la composition de platine est durcie par dispersion, et/ou
le fil présente un allongement à la rupture d'au moins 12 %, de préférence d'au moins 15 %.

3. Fil selon la revendication 1 ou 2, **caractérisé en ce que**
la somme des impuretés représente une proportion de maximum 1 % en poids dans la composition de platine, de préférence de maximum 0,5 % en poids.

4. Fil selon l'une des revendications précédentes, **caractérisé en ce que**
le fil est constitué d'au moins 90 % en poids de la composition de platine ou le fil est constitué de la composition de platine à l'exception d'un revêtement ou placage extérieur ou le fil est constitué de la composition de platine.

5. Fil selon l'une des revendications précédentes, **caractérisé en ce que**
les oxydes de l'au moins un métal non précieux sont présents au moins à 50 % en moles en tant qu'oxyde de zirconium stabilisé en phase cubique avec un oxyde d'yttrium et/ou un oxyde de scandium, de préférence les oxydes de l'au moins un métal non précieux sont présents au moins à 80 % en moles en tant qu'oxyde de zirconium stabilisé en phase cubique avec un oxyde d'yttrium et/ou un oxyde de scandium.

6. Fil selon l'une des revendications précédentes, **caractérisé en ce que**
la composition de platine est produite par métallurgie de type fusion et est ensuite oxydée par un traitement thermique dans un milieu oxydant, de sorte que les métaux non précieux contenus dans la composition de platine sont oxydés à au moins 90 % ou complètement oxydés, de préférence la composition de platine étant ensuite formée en ledit fil et, de manière particulièrement préférée, étant recuite avant et/ou après cela.

7. Fil selon l'une des revendications précédentes, **caractérisé en ce que**
la composition de platine contient au moins 80 % en poids de platine, y compris des impuretés, la composition de platine contenant de préférence jusqu'à 17,95 % en poids de rhodium, et/ou
la composition de platine contient au moins 1 % en poids de l'au moins un métal précieux qui est sélectionné dans un groupe qui est constitué de rhodium, or, palladium et iridium, de préférence la composition de platine contenant au moins 5 % en poids de rhodium en tant que l'au moins un métal précieux.

8. Fil selon l'une des revendications précédentes, **caractérisé en ce que**
la composition de platine est constituée de 2 % en poids à 3,5 % en poids de tungstène, de 5 % en poids à 15 % en poids de rhodium, de 0,05 % en poids à 1 % en poids des oxydes d'au moins un métal non précieux qui est sélectionné dans le groupe qui est constitué de (i) zirconium, (ii) aluminium et (iii) zirconium et d'au moins un élément sélectionné parmi aluminium, yttrium et scandium et, comme reste, du platine, y compris des impuretés, ou
la composition de platine est constituée de 2 % en poids à 3 % en poids de tungstène, de 0,05 % en poids à 1 % en poids des oxydes d'au moins un métal non précieux qui est sélectionné dans le groupe qui est constitué de (i) zirconium, (ii) aluminium et
(iii) zirconium et d'au moins un élément sélectionné parmi aluminium, yttrium et scandium et, comme reste, du platine, y compris des impuretés.

9. Fil selon l'une des revendications précédentes, **caractérisé en ce que**
la composition de platine contient entre 2,0 % en poids et 3,0 % en poids de tungstène, de préférence entre 2,4 % en poids et 2,8 % en poids de tungstène.

10. Capteur de température, en particulier capteur de haute température, permettant de déterminer la température, le capteur de température présentant au moins un fil selon l'une des revendications précédentes, de préférence présentant deux fils selon l'une des revendications précédentes.

11. Capteur de température selon la revendication 10, **caractérisé en ce que**
un contact thermique ou une structure résistive, en particulier une couche résistive, du capteur de température est connecté de manière électroconductrice à l'au moins un fil pour la mise en contact électrique, de préférence le capteur de température présentant deux fils selon l'une des revendications 1 à 9 et une extrémité d'un premier fil parmi les deux fils étant connectée de manière électroconductrice à un côté du contact thermique ou de la structure résistive ou de la couche résistive, et une extrémité d'un second fil parmi les deux fils étant connectée de manière électroconductrice à un autre côté du contact thermique ou de la structure résistive ou de la couche résistive.

12. Procédé permettant la production d'une composition de platine comportant les étapes chronologiques suivantes :
A) production d'une masse fondue présentant entre 2 % en poids et 3,5 % en poids de tungstène, jusqu'à 47,95 % en poids d'au moins un métal précieux qui est sélectionné dans le groupe qui est constitué de rhodium, or, iridium et palladium et de mélanges de ceux-ci, 0,05 % en poids à 1 % en poids d'au moins un métal non précieux pouvant être oxydé qui est sélectionné dans le groupe qui est constitué de (i) zirconium, (ii) aluminium et
(iii) zirconium et d'au moins un élément sélectionné parmi aluminium, yttrium et scandium, et présentant comme reste au moins 50 % en poids de platine, y compris des impuretés,
B) solidification de la masse fondue en un corps solide,
C) traitement du corps solide en un corps volumique,
D) oxydation des métaux non précieux contenus dans le corps volumique par un traitement thermique dans un milieu oxydant pendant une période de temps d'au moins 24 heures à une température d'au moins 750 °C, et
E) traitement du corps volumique en un fil.

13. Procédé selon la revendication 12, **caractérisé en ce que**
un fil selon l'une des revendications 1 à 11 est produit, en particulier est étiré ou pressé, à l'aide du procédé.

14. Procédé selon la revendication 12 ou 13, **caractérisé en ce que**
à l'étape E), le corps solide est tout d'abord recuit pour améliorer la ductilité à au moins 1300 °C pendant au moins 1 h puis est étiré ou pressé en un fil, de préférence un recuit à une température comprise entre 1000 °C et 1200 °C ayant lieu avant et/ou après l'étirage ou le pressage.

15. Procédé permettant la production d'un capteur de température, **caractérisé par**
la production d'un fil à l'aide d'un procédé selon l'une des revendications 12 à 14 et la mise en contact électrique d'un contact thermique ou d'une structure résistive ou d'une couche résistive avec au moins une partie du fil, de préférence avec au moins deux parties du fil.
